# EUROPEAN PATENT SPECIFICATION

(11) **EP 1 211 396 B1**
(45) Date of publication and mention of the grant of the patent: **12.01.2005**
(21) Application number: 01128238.1
(22) Date of filing: 28.11.2001
(51) Int. Cl.: F01N 3/20, B01D 53/94, F01N 3/18, F01N 3/36, F02D 41/22

(54) **Exhaust gas purifying device for internal combustion engine**
Abgasreinigungsvorrichtung einer Brennkraftmaschine
Dispositif de purification de gaz d'échappement pour un moteur à combustion interne

(30) Priority: 01.12.2000 JP 2000367557
(43) Date of publication of application: 05.06.2002
(73) Proprietor: TOYOTA JIDOSHA KABUSHIKI KAISHA, Toyota-shi, Aichi-ken 471-8571 (JP); Denso Corporation, Kariya-city, Aichi-pref., 448-8661 (JP)
(72) Inventor: Kobayashi, Masaaki, Toyota-shi, Aichi-ken, 471-8571 (JP); Matsushita, Souichi, Toyota-shi, Aichi-ken, 471-8571 (JP); Ohki, Hisashi, Toyota-shi, Aichi-ken, 471-8571 (JP); Hayashi, Kotaro, Toyota-shi, Aichi-ken, 471-8571 (JP); Ishiyama, Shinobu, Toyota-shi, Aichi-ken, 471-8571 (JP); Shibata, Daisuke, Toyota-shi, Aichi-ken, 471-8571 (JP); Magarida, Naofumi, Toyota-shi, Aichi-ken, 471-8571 (JP); Oda, Tomihisa, Toyota-shi, Aichi-ken, 471-8571 (JP); Harada, Yasuo, Toyota-shi, Aichi-ken, 471-8571 (JP); Negami, Akihiko, Toyota-shi, Aichi-ken, 471-8571 (JP); Matsuoka, Hiroki, Toyota-shi, Aichi-ken, 471-8571 (JP); Otsubo, Yasuhiko, Toyota-shi, Aichi-ken, 471-8571 (JP); Aoyama, Taro, Toyota-shi, Aichi-ken, 471-8571 (JP); Tahara, Jun, Toyota-shi, Aichi-ken, 471-8571 (JP); Umehara, Akira, Kariya-city, Aichi-pref. 448-8661 (JP)
(74) Representative: Leson, Thomas Johannes Alois, Dipl.-Ing.

(56) References cited:
- EP-A- 0 953 739
- EP-A- 1 176 292
- US-A- 5 709 080
- PATENT ABSTRACTS OF JAPAN vol. 1999, no. 09, 30 July 1999 (1999-07-30) & JP 11 093641 A (TOYOTA MOTOR CORP), 6 April 1999 (1999-04-06)

## Description

### BACKGROUND OF THE INVENTION

### 1. Field of the Invention

The invention relates to an exhaust gas purifying device for an internal combustion engine, and more particularly, to an exhaust gas purifying device designed to add a reducing agent such as fuel to a catalyst.

### 2. Description of Related Art

An exhaust gas purifying device for adding a reducing agent such as fuel to discharge and reduce NOx absorbed by an occlusion-reduction type catalyst is disclosed, for example, in Japanese Patent Application Laid-Open No. 11-93641.

This is an exhaust gas purifying device for an internal combustion engine in which combustion occurs at a lean air-fuel ratio. Exhaust gas discharged therefrom is introduced into an exhaust passage and purified by a catalyst disposed in the exhaust passage. The exhaust passage diverges into first and second exhaust passages. This exhaust gas purifying device is characterized by comprising a flow passage switching means, an occlusion-reduction type catalyst, a selective-reduction type catalyst, and a reducing agent adding means . The flow passage switching means switches the flow passage of exhaust gas such that exhaust gas flows through the second exhaust passage when the temperature thereof falls and that exhaust gas flows through the first exhaust passage when the temperature thereof does not fall. The occlusion-reduction type catalyst, which is disposed in the first exhaust passage, absorbs NOx when the air-fuel ratio of exhaust gas flowing thereinto is lean, and discharges the NOx thus absorbed when the concentration of oxygen in the exhaust gas drops. The selective-reduction type catalyst, which is disposed in the second exhaust passage, reduces or decomposes NOx in the presence of hydrocarbon under the atmosphere containing an excessive concentration of oxygen. The reducing agent adding means adds a reducing agent to the occlusion-reduction type catalyst while exhaust gas flows through the second exhaust passage, thus ensuring that the NOx absorbed by the occlusion-reduction type catalyst are discharged and reduced.

Such a device can use fuel in the internal combustion engine as a reducing agent. In this case, it is customary to supply the fuel adding device with fuel through a passage diverging from a fuel supplying pump of the internal combustion engine.

Such a device may possibly suffer a malfunction such as fuel leakage in a region extending from the fuel supplying pump to the fuel adding device. However, no method for detecting the occurrence of fuel leakage in the fuel adding device has been proposed.

Should fuel leakage occur in the fuel adding device, the catalyst is no longer supplied with fuel as a reducing agent. This leads to a deterioration in the NOx purification ratio. Further, fuel is injected to the catalyst without interruption so that the catalyst may be damaged. Thus, in the event of fuel leakage in the exhaust fuel adding device, a means for detecting the occurrence of fuel leakage and forcefully stopping fuel from being supplied is required.

Further, it is referred to the content of EP-A-1176292 that is an European application filed earlier, but published after the filing date of the present European patent. The earlier European application discloses a reducing-agent supplying apparatus for supplying a reducing-agent to an exhaust gas purifying catalyst. The reducing-agent supplying apparatus includes a reducing-agent supplying mechanism for supplying the reducing-agent to the exhaust passage upstream from the exhaust gas purifying catalyst, a pressure detecting sensor for detecting pressure of the reducing-agent in the reducing-agent supplying mechanism and an ECU for determining abnormality of the reducing-agent supplying mechanism such as leakage of the reducing-agent on the basis of the pressure detected by the pressure detecting sensor. If an abnormality of the reducing-agent supplying mechanism is detected, a shut-off valve is closed in the reducing-agent supplying mechanism to thereby prevent overheating of the exhaust gas purifying catalyst.

### SUMMARY OF THE INVENTION

It is an object of the invention to provide an exhaust gas purifying device capable of detecting the occurrence of fuel leakage in a device that is designed to add fuel to an exhaust gas purifying catalyst as a reducing agent.

The above object is achieved by an exhaust gas purifying device according to claim 1.

In the aforementioned exhaust gas purifying device, if the upstream fuel pressure applied to the emergency shut-off valve becomes higher than the downstream fuel pressure applied to the emergency shut-off valve, it is inferable that fuel leakage has occurred downstream of the emergency shut-off valve. Hence, the emergency shut-off valve is forced to remain closed, whereby further escalation of fuel leakage can be prevented.

Herein, after the issuance of an instruction to open the emergency shut-off valve, it is determined whether or not the emergency shut-off valve has been opened. If it is determined that the emergency shut-off valve remains closed despite the issuance of the instruction to open the same, it can be concluded that the leakage of fuel to be added has occurred downstream of the emergency shut-off valve and that the upstream fuel pressure applied to the emergency shut-off valve has thus become higher than the downstream fuel pressure applied to the emergency shut-off valve.

In the case where an exhaust air-fuel ratio detecting means for detecting an exhaust air-fuel ratio is provided so as to detect whether or not the emergency shut-off valve is closed, the exhaust air-fuel ratio during closure of the emergency shut-off valve is detected by means of the exhaust air-fuel ratio detecting means. An instruction to open the emergency shut-off valve is then issued. Also, the exhaust air-fuel ratio detecting means then detects exhaust air-fuel ratios sequentially after the issuance of an instruction to add fuel. If the exhaust air-fuel ratios thus detected are not arranged in such an order as to shift to the rich side with the lapse of time, it can be determined that fuel leakage has occurred in the fuel adding system downstream of the emergency shut-off valve. That is, if the exhaust air-fuel ratio detecting means detects that the exhaust air-fuel ratio does not become rich despite the issuance of an instruction to add fuel, the occurrence of leakage of fuel to be added downstream of the emergency shut-off valve is detected.

Means other than the aforementioned one can also be employed to detect whether or not the emergency shut-off valve is closed. For example, it is possible to employ a sensor for detecting the position of the shut-off valve, the temperature of exhaust gas, a deterioration in the purification performance of the exhaust gas purifying catalyst, or the like.

It is preferable that the emergency shut-off valve have a two-stage structure composed of first and second driving means, that the emergency shut-off valve be driven in opening and closing directions by a driving force of the first driving means during normal operation, and that the emergency shut-off valve cannot be opened by a driving force of the first driving means but can be opened upon application of a driving force of the second driving means if the fuel pressure upstream of the emergency shut-off valve becomes higher than the fuel pressure downstream of the emergency shut-off valve.

Furthermore, it is more preferable that the exhaust air-fuel ratio detecting means detect an exhaust air-fuel ratio when the emergency shut-off valve is open, that an instruction to close the emergency shut-off valve be then issued, that the exhaust air-fuel ratio detecting means then detect exhaust air-fuel ratios sequentially after the issuance of an instruction to add fuel, and that the emergency shut-off valve be regarded as having been closed normally and be opened by the second driving means if the exhaust air-fuel ratios thus detected are not arranged in such an order as to shift to the rich side with the lapse of time.

### BRIEF DESCRIPTION OF THE DRAWINGS

Fig. 1 is an overall structural view of an internal combustion engine employing a malfunction detecting device of a reducing agent supplying mechanism in an exhaust gas purifying device according to embodiments of the invention, and of intake and exhaust systems of the internal combustion engine.
Fig. 2A is a view for illustrating the mechanism by which an occlusion-reduction type NOx catalyst occludes NOx.
Fig. 2B is a view for illustrating the mechanism by which the occlusion-reduction type NOx catalyst discharges NOx.
Fig. 3 is a block diagram showing the internal structure of an ECU.
Fig. 4 shows a structural example of the essential part of a first embodiment of the invention.
Fig. 5 is a structural view of an emergency shut-off valve.
Fig. 6 is a flowchart showing the procedure of performing driving control of the emergency shut-off valve.
Fig. 7 is a structural view of another emergency shut-off valve of a second embodiment of the invention.
Fig. 8 is a flowchart showing the procedure of performing driving control of the emergency shut-off valve shown in Fig. 7.

### DETAILED DESCRIPTION OF PREFERRED EMBODIMENTS

Hereinafter, concrete embodiments of an exhaust gas purifying device according to the invention will be described with reference to the drawings. The description will be made herein referring to an exemplary case in which the invention is applied to a diesel engine for driving a vehicle.

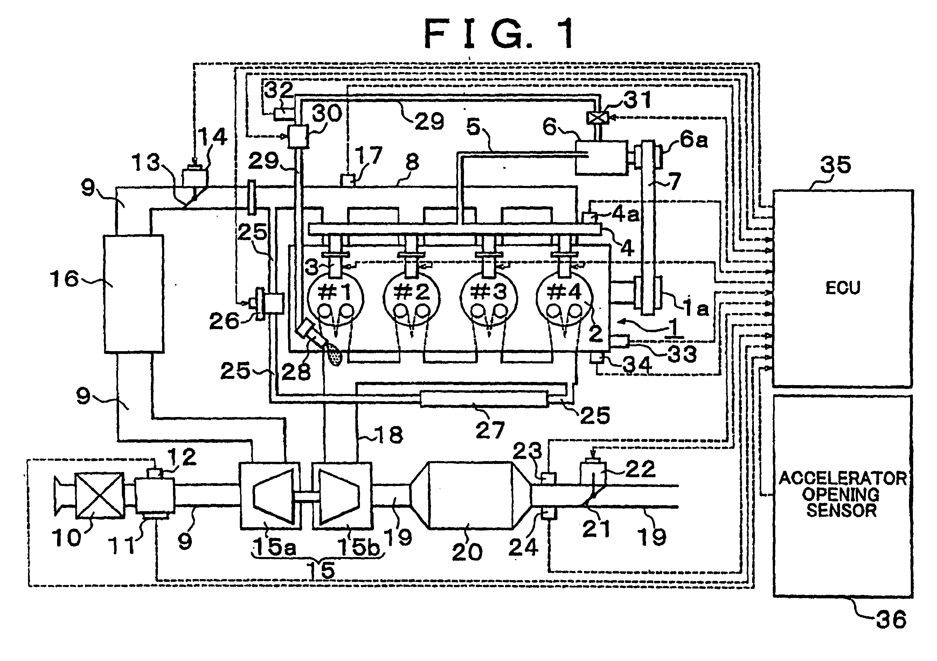

Fig. 1 is an overall structural view of an internal combustion engine employing an exhaust gas purifying device of the invention, and of intake and exhaust systems of the internal combustion engine. An internal combustion engine 1 shown in Fig. 1 is a water-cooled four-stroke-cycle diesel engine having four cylinders 2.

The internal combustion engine 1 has fuel injection valves 3, each of which directly injects fuel into a combustion chamber of a corresponding one of the cylinders 2. The fuel injection valves 3 are connected to an accumulator (common rail) 4 for accumulating fuel at a pressure equal to or lower than a predetermined pressure. The common rail 4 is fitted with a common rail pressure sensor 4a that outputs an electric signal corresponding to a pressure of fuel in the common rail 4.

The common rail 4 communicates with a fuel pump 6 via a fuel supplying pipe 5. The fuel pump 6 operates using the rotational torque of an output shaft (crank shaft) of the internal combustion engine 1 as a driving source. A pump pulley 6a is coupled with a crank pulley 1a via a belt 7. The pump pulley 62 is mounted on an input shaft of the fuel pump 6. The crank pulley 1a is mounted on the output shaft (crank shaft) of the internal combustion engine 1.

In a fuel injection system thus constructed, if a rotational torque of the crank shaft is transmitted to the input shaft of the fuel pump 6, the fuel pump 6 discharges fuel at a pressure corresponding to the rotational torque that has been transmitted to the input shaft of the fuel pump 6 from the crank shaft.

Fuel discharged from the fuel pump 6 is supplied to the common rail 4 via the fuel supplying pipe 5, is accumulated in the common rail 4 until it reaches the predetermined pressure, and is distributed to the fuel injection valves 3 disposed in the cylinders 2 respectively. Upon application of a driving current to each of the fuel injection valves 3, the fuel injection valve 3 opens so that fuel is injected from the fuel injection valve 3 into a corresponding one of the cylinders 2.

An intake manifold 8 is connected to the internal combustion engine 1. Each branch of the intake manifold 8 communicates with the combustion chamber of a corresponding one of the cylinders 2 via an intake port (not shown).

The intake manifold 8 is connected to an intake pipe 9, which is connected to an air cleaner box 10. An air flow meter 11 and an intake air temperature sensor 12 are attached to the intake pipe 9 at positions downstream of the air cleaner box 10. The air flow meter 11 outputs an electric signal corresponding to a mass of intake air flowing through the intake pipe 9. The intake air temperature sensor 12 outputs an electric signal corresponding to a temperature of intake air flowing through the intake pipe 9.

An intake throttle valve 13 for adjusting the flow rate of intake air flowing through the intake pipe 9 is disposed in the intake pipe 9 at a position immediately upstream of the intake manifold 8. The intake throttle valve 13 is fitted with an intake throttle actuator 14 that is constructed of a stepper motor or the like and that drives the intake throttle valve 13 in opening and closing directions.

A compressor housing 15a of a centrifugal supercharger (turbocharger) 15 is disposed in the intake pipe 9 at a position between the air flow meter 11 and the intake throttle valve 13. The centrifugal supercharger 15 operates using thermal energy of exhaust gas as a driving source. An intercooler 16 for cooling intake air that has been compressed in the compressor housing 15a and heated to a high temperature is disposed in the intake pipe 9 at a position downstream of the compressor housing 15a.

In an intake system thus constructed, intake air that has flown into the air cleaner box 10 is removed of dust, dirt and the like by an air cleaner (not shown) in the air cleaner box 10, and then flows into the compressor housing 15a via the intake pipe 9.

The intake air that has flown into the compressor housing 15a is compressed by rotation of a compressor wheel disposed inside the compressor housing 15a. The intake air that has been compressed in the compressor housing 15a and heated to a high temperature is cooled by the intercooler 16 and then flows into the intake manifold 8. If need be, the intake throttle valve 13 adjusts the flow rate of the intake air before it flows into the intake manifold 8. The intake air that has flown into the intake manifold 8 is distributed to the combustion chamber of each of the cylinders 2 via a corresponding branch. Fuel that has been injected from the fuel injection valve 3 of each of the cylinders 2 is used as an ignition source for burning the intake air.

On the other hand, an exhaust manifold 18 is connected to the internal combustion engine 1. Each branch of the exhaust manifold 18 communicates with the combustion chamber of a corresponding one of the cylinders 2 via an exhaust port (not shown).

The exhaust manifold 18 is connected to a turbine housing 15b of the centrifugal supercharger 15. The turbine housing 15b is connected to an exhaust pipe 19, which is connected at its downstream end to a muffler (not shown).

The exhaust pipe 19 extends across an exhaust gas purifying catalyst 20 for purifying noxious gas components in exhaust gas. An air-fuel ratio sensor 23 and an exhaust gas temperature sensor 24 are attached to the exhaust pipe 19 at a position downstream of the exhaust gas purifying catalyst 20. The air-fuel ratio sensor 23 outputs an electric signal corresponding to an air-fuel ratio of exhaust gas flowing through the exhaust pipe 19. The exhaust gas temperature sensor 24 outputs an electric signal corresponding to a temperature of exhaust gas flowing through the exhaust pipe 19.

An exhaust throttle valve 21 for adjusting the flow rate of exhaust gas flowing through the exhaust pipe 19 is disposed in the exhaust pipe 19 at a position downstream of the air-fuel ratio sensor 23 and the exhaust gas temperature sensor 24. The exhaust throttle valve 21 is fitted with an exhaust throttle actuator 22 that is constructed of a stepper motor or the like and that drives the exhaust throttle valve 21 in opening and closing directions.

In an exhaust system thus constructed, the mixture (burnt gas) that has been burnt in each of the cylinders 2 of the internal combustion engine 1 is discharged to the exhaust manifold 18 via the exhaust port, and then flows from the exhaust manifold 18 into the turbine housing 15b of the centrifugal supercharger 15. The exhaust gas that has flown into the turbine housing 15b has thermal energy, which is used to rotate a turbine wheel that is rotatably supported in the turbine housing 15b. Herein, the rotational torque of the turbine wheel is transmitted to the compressor wheel of the compressor housing 15a.

The exhaust gas that has been discharged from the turbine housing 15b flows into the exhaust gas purifying catalyst 20 via the exhaust pipe 19, so that noxious gas components in the exhaust gas are removed or purified. The exhaust gas whose noxious gas components have been removed or purified by the exhaust gas purifying catalyst 20 is discharged into the atmosphere via the muffler. If need be, the exhaust throttle valve 21 adjusts the flow rate of the exhaust gas before it is discharged into the atmosphere.

Further, the exhaust manifold 18 communicates with the intake manifold 8 via an exhaust gas recirculation passage (EGR passage) 25 by which part of exhaust gas flowing through the exhaust manifold 18 is recirculated into the intake manifold 8. The EGR passage 25 extends across a flow rate adjusting valve (EGR valve) 26 that is constructed of an electromagnetic valve or the like and that changes the flow rate of exhaust gas flowing through the EGR passage 25 (hereinafter referred to as EGR gas) in accordance with the impressed current.

An EGR cooler 27 for cooling EGR gas flowing through the EGR passage 25 is disposed in the EGR passage 25 at a position upstream of the EGR valve 26.

In an exhaust gas recirculation mechanism thus constructed, if the EGR valve 26 is opened, the EGR passage 25 becomes passable, so that part of the exhaust gas flowing through the exhaust manifold 18 flows into the EGR passage 25 and is introduced into the intake manifold 8 via the EGR cooler 27.

Herein, the EGR cooler 27 is designed to cause heat exchange between EGR gas flowing through the EGR passage 25 and a predetermined coolant so as to cool the EGR gas.

The EGR gas that has been recirculated into the intake manifold 8 from the exhaust manifold 18 via the EGR passage 25 is introduced into the combustion chamber of each of the cylinders while mixing with fresh air that has flown from a region upstream of the intake manifold 8. Fuel injected from a corresponding one of the fuel injection valves 3 is used as an ignition source for burning the EGR gas.

It is to be noted herein that EGR gas itself is incombustible like water (H₂O), carbon dioxide (CO₂), and the like and contains endothermic inert gas components. Therefore, if the mixture contains EGR gas, the combustion temperature of the mixture is lowered so that the amount of generation of nitrogen oxides (NOx) is reduced.

Furthermore, EGR gas falls in temperature and decreases in volume if cooled in the EGR cooler 27. Thus, when EGR gas is supplied to the combustion chamber, the temperature of atmosphere in the combustion chamber is prevented from rising unnecessarily, and the amount (volume) of fresh air supplied to the combustion chamber is prevented from decreasing unnecessarily.

Next, the exhaust gas purifying catalyst 20 according to this embodiment will be described specifically.

The exhaust gas purifying catalyst 20 is an NOx catalyst that purifies nitrogen oxides (NOx) in exhaust gas in the presence of a reducing agent. Although such an NOx catalyst ranges from a selective-reduction type NOx catalyst to an occlusion-reduction type NOx catalyst and the like, the following description will handle the occlusion-reduction type NOx catalyst as an example. Hereinafter, the exhaust gas purifying catalyst 20 will be referred to as the occlusion-reduction type NOx catalyst 20.

The occlusion-reduction type NOx catalyst 20 has a carrier made, for example, from alumina (Al₂O₃). For example, at least one substance selected from an alkali metal such as potassium (K), sodium (Na), lithium (Li), and cesium (Cs), an alkali earth such as barium (Ba) and calcium (Ca), and a rare earth such as lanthanum (La) and yttrium (Y), and a noble metal such as platinum (Pt) are carried on the carrier.

The occlusion-reduction type NOx catalyst 20 thus constructed occludes nitrogen oxides (NOx) in exhaust gas if the air-fuel ratio of exhaust gas flowing into the occlusion-reduction type NOx catalyst 20 (hereinafter referred to as the exhaust air-fuel ratio) is lean, and discharges, reduces, and purifies the occluded nitrogen oxides (NOx) if the exhaust gas flowing into the occlusion-reduction type NOx catalyst 20 has a reduced concentration of oxygen in the presence of a reducing agent.

It is to be noted herein that the exhaust air-fuel ratio means the ratio of the total amount of air supplied to an exhaust passage upstream of the exhaust gas purifying catalyst, combustion chambers, an intake passage, and the like to the total amount of fuel (hydrocarbon) supplied thereto. Accordingly, as long as no fuel, reducing agent, or air is supplied to the exhaust passage upstream of the occlusion-reduction type NOx catalyst 20, the exhaust air-fuel ratio coincides with the air-fuel ratio of the mixture supplied to the combustion chambers.

The mechanism by which the occlusion-reduction type NOx catalyst 20 occludes and discharges NOx will now be described on the basis of an occlusion-reduction type NOx catalyst having platinum (Pt) and barium (Ba) carried on a carrier made from alumina.

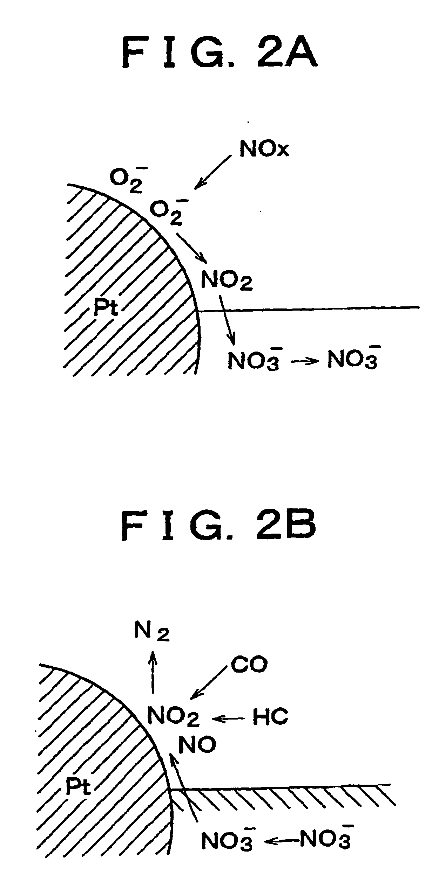

It is considered that the occlusion-reduction type NOx catalyst 20 occludes and discharges NOx basically by a mechanism shown in Fig. 2. It is to be understood that "occlusion" used herein (in this specification) means retention of a substance (solid, liquid, gas molecules) in the form of at least one of adsorption, adhesion, absorption, trapping, storage, and others.

First of all, if the air-fuel ratio of exhaust gas flowing into the occlusion-reduction type NOx catalyst 20 becomes lean so that the concentration of oxygen in the exhaust gas is increased, oxygen (O₂) in the exhaust gas adheres to the surface of platinum (Pt) in the form of O₂⁻ or O²⁻, and nitrogen monoxide (NO) in the exhaust gas reacts with O₂⁻ or O²⁻ on the surface of platinum (Pt) to form nitrogen dioxide (NO₂) (2NO+O₂→NO₂), as is apparent from Fig. 2A. Nitrogen dioxide (NO₂) is combined with barium oxide (BaO) while being oxidized on the surface of platinum (Pt), thus forming nitrate ion (NO₃⁻). Thus, the occlusion-reduction type NOx catalyst occludes nitrogen oxides (NOx) in exhaust gas as nitrate ion (NO₃⁻).

The operation of occluding NOx as described above lasts as long as the air-fuel ratio of exhaust gas flowing into the occlusion-reduction type NOx catalyst is lean and as long as the NOx-occlusion capacity of the occlusion-reduction type NOx catalyst remains unsaturated.

On the other hand, as shown in Fig. 2B, if the concentration of oxygen flowing into the occlusion-reduction type NOx catalyst 20 decreases, the amount of production of nitrogen dioxide (NO₂) decreases. Therefore, the nitrate ion (NO₃⁻) combined with barium oxide (BaO) reverts to nitrogen dioxide (NO₂) and nitrogen monoxide (NO) and is removed from the occlusion-reduction type NOx catalyst.

That is, if the concentration of oxygen in exhaust gas flowing into the occlusion-reduction type NOx catalyst 20 decreases, nitrogen oxides (NOx) occluded by the occlusion-reduction type NOx catalyst 20 in the form of nitrate ion (NO₃⁻) are converted into nitrogen dioxide (NO2) and nitrogen monoxide (NO) and are discharged from the occlusion-reduction type NOx catalyst 20.

The nitrogen oxides (NOx) discharged from the occlusion-reduction type NOx catalyst 20 react with reducing components contained in exhaust gas (e.g. the activated versions of hydrocarbon (HC), carbon monoxide (CO), and the like that have been partially oxidized by reacting with oxygen O₂⁻ or O²⁻ on platinum (Pt) of the occlusion-reduction type NOx catalyst 20), and are reduced to nitrogen (N₂) and the like, as is apparent from Fig. 2B.

That is, hydrocarbon (HC) and carbon monoxide (CO) in exhaust gas are oxidized by reacting with O₂⁻ or O²⁻ on platinum (Pt). Hence, if hydrocarbon (HC) and carbon monoxide (CO) still remain despite consumption of the O₂⁻ or O²⁻ on platinum (Pt), the hydrocarbon (HC) and carbon monoxide (CO) react with the nitrogen oxides (NOx) discharged from the occlusion-reduction type NOx catalyst 20 and the nitrogen oxides (NOx) discharged from the internal combustion engine 1. Consequently, the nitrogen oxides (NOx) are reduced to nitrogen (N₂).

Thus, if the air-fuel ratio of exhaust gas flowing into the occlusion-reduction type NOx catalyst 20 is made stoichiometric or rich, nitrogen oxides (NOx) occluded by the occlusion-reduction type NOx catalyst 20 can be reduced while being discharged.

It is to be noted herein that the occlusion-reduction type NOx catalyst 20 is limited in NOx-occlusion capacity. Thus, if exhaust gas having a lean air-fuel ratio flows into the occlusion-reduction type NOx catalyst 20 over a long period of time, the NOx-occlusion capacity of the occlusion-reduction type NOx catalyst 20 becomes saturated, so that nitrogen oxides (NOx) in exhaust gas are discharged into the atmosphere without being removed or purified by the occlusion-reduction type NOx catalyst 20.

However, diesel engines such as the internal combustion engine 1 are designed such that the mixture having a lean air-fuel ratio is burnt in most of the operational ranges and that the air-fuel ratio of exhaust gas assumes a lean air-fuel ratio correspondingly in most of the operational ranges. Hence, the NOx-occlusion capacity of the occlusion-reduction type NOx catalyst 20 is likely to be saturated.

Accordingly, in the case where the occlusion-reduction type NOx catalyst 20 is applied to a lean-burn internal combustion engine such as a diesel engine, it is required that the air-fuel ratio of exhaust gas be made stoichiometric or rich at a predetermined timing prior to saturation of the NOx-occlusion capacity of the occlusion-reduction type NOx catalyst 20.

On the other hand, the internal combustion engine 1 according to this embodiment is provided with a reducing agent supplying mechanism that adds fuel (light oil) as a reducing agent to exhaust gas flowing through the exhaust gas passage upstream of the occlusion-reduction type NOx catalyst 20.

As shown in Fig. 1, the reducing agent supplying mechanism has a reducing agent injection valve 28, a reducing agent supplying passage 29, a flow rate adjusting valve 30, an emergency shut-off valve 31, and a reducing agent pressure sensor 32. The reducing agent injection valve 28 has an injection hole fitted to a cylinder head of the internal combustion engine 1 in such a manner as to face the inside of the exhaust manifold 18, and opens to inject fuel upon application of a fuel pressure equal to or higher than a predetermined opening pressure. Fuel discharged from the fuel pump 6 is introduced into the reducing agent injection valve 28 through the reducing agent supplying passage 29. The reducing agent supplying passage 29 extends across the flow rate adjusting valve 30, which adjusts the flow rate of fuel flowing through the reducing agent supplying passage 29. The emergency shut-off valve 31, which stops fuel from flowing through the reducing agent supplying passage 29, is disposed in the reducing agent supplying passage 29 at a position upstream of the flow rate adjusting valve 30. The reducing agent pressure sensor 32 is attached to the reducing agent supplying passage 29 at a position upstream of the flow rate adjusting valve 30 and is designed to output an electric signal corresponding to a pressure in the reducing agent supplying passage 29.

The reducing agent injection valve 28 is preferably fitted to the cylinder head in such a manner as to have the injection hole located in the exhaust manifold 18 at a position downstream of a region where the exhaust manifold 18 is connected to the EGR passage 25, to protrude into the exhaust port of one of the cylinders 2 that is located closest to a converging portion of four branches of the exhaust manifold 18, and to face the converging portion of the exhaust manifold 18.

This is because of the intention of preventing the reducing agent (unburnt fuel components) injected from the reducing agent injection valve 28 from flowing into the EGR passage 25 and ensuring that the reducing agent reaches the turbine housing 15b of the centrifugal supercharger instead of staying in the exhaust manifold 18.

In the example shown in Fig. 1, since the first (#1) cylinder 2 is located closest to the converging portion of the exhaust manifold 18 among the four cylinders 2 of the internal combustion engine 1, the reducing agent injection valve 28 is fitted to the exhaust port of the first (#1) cylinder 2. However, if another one of the cylinders 2 is located closest to the converging portion of the exhaust manifold 18, the reducing agent injection valve 28 is fitted to the exhaust port of that cylinder 2.

It is also appropriate that the reducing agent injection valve 28 be fitted in such a manner as to penetrate or adjoin a water jacket (not shown) formed in the cylinder head, and that the reducing agent injection valve 28 be cooled by coolant flowing through the water jacket.

Such a reducing agent supplying mechanism is designed such that high-pressure fuel discharged from the fuel pump 6 is supplied to the reducing agent injection valve 28 via the reducing agent supplying passage 29 if the flow rate adjusting valve 30 is opened. If the pressure of the fuel supplied to the reducing agent injection valve 28 becomes equal to or higher than the opening pressure, the reducing agent injection valve 28 opens so that the fuel as a reducing agent is injected into the exhaust manifold 18.

The reducing agent that has been injected into the exhaust manifold 18 from the reducing agent injection valve 28 flows into the turbine housing 15b together with exhaust gas that has flown from a region upstream of the exhaust manifold 18. The exhaust gas and the reducing agent that have flown into the turbine housing 15b are stirred by rotation of the turbine wheel and mixed with each other homogeneously, thus forming exhaust gas having a stoichiometric or rich air-fuel ratio.

The stoichiometric or rich exhaust gas thus formed flows from the turbine housing 15b into the occlusion-reduction type NOx catalyst 20 via the exhaust pipe 19, whereby nitrogen oxides (NOx) occluded by the occlusion-reduction type NOx catalyst 20 are reduced to nitrogen (N₂) while being discharged.

If the flow rate adjusting valve 30 is then closed to stop the reducing agent from being supplied to the reducing agent injection valve 28 from the fuel pump 6, the pressure of fuel supplied to the reducing agent injection valve 28 becomes lower than the aforementioned opening pressure. Consequently, the reducing agent injection valve 28 closes, so that the reducing agent is stopped from being supplied to the exhaust manifold 18.

The internal combustion engine 1 constructed as described above is integrated with an electronic control unit (ECU) 35 for controlling the internal combustion engine 1.

The ECU 35 is designed to control the operational state of the internal combustion engine 1 in accordance with the operating conditions of the internal combustion engine 1 or a request from the driver.

Various sensors including the common rail pressure sensor 4a, the airflow meter 11, the intake air temperature sensor 12, an intake pipe pressure sensor 17, the air-fuel ratio sensor 23, the exhaust gas temperature sensor 24, the reducing agent pressure sensor 32, a crank position sensor 33, a coolant temperature sensor 34, and an accelerator opening sensor 36 are connected to the ECU 35 via electric wires, so that output signals from these sensors are inputted to the ECU 35.

On the other hand, the fuel injection valves 3, the intake throttle actuator 14, the exhaust throttle actuator 22, the EGR valve 26, the flow rate adjusting valve 30, the emergency shut-off valve 31, and the like are connected to the ECU 35 via electric wires, so that the ECU 35 can control these components.

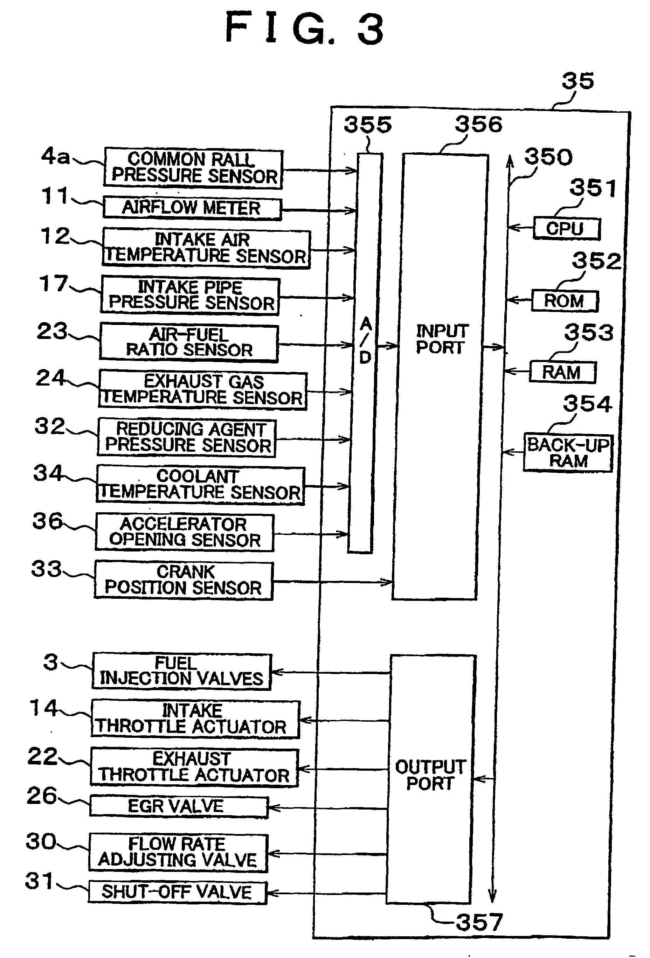

As shown in Fig. 3, the ECU 35 has a CPU 351, a ROM 352, a RAM 353, a back-up RAM 354, an input port 356, and an output port 357, which are interconnected to one another by a bi-directional bus 350. The ECU 35 also has an A/D converter (A/D) 355 connected to the input port 356.

During reducing agent adding control, the CPU 351 first determines whether or not a condition allowing the addition of a reducing agent has been fulfilled. For example, this condition may be that the occlusion-reduction type NOx catalyst 20 has been activated, that the output signal value of the exhaust gas temperature sensor 24 (exhaust gas temperature) is equal to or lower than a predetermined upper limit value, that heat-up control or SOx poisoning recovery control is not being performed so as to recover the occlusion-reduction type NOx catalyst 20 from SOx poisoning, or the like.

If it is determined that the condition as described above is fulfilled, the CPU 351 controls the flow rate adjusting valve 30 such that the air-fuel ratio of exhaust gas flowing into the occlusion-reduction type NOx catalyst 20 is made stoichiometric or rich at intervals of a relatively short period in a spike manner, thus discharging and reducing nitrogen oxides (NOx) occluded by the occlusion-reduction type NOx catalyst 20 at intervals of a short period.

Herein, the CPU 351 reads out an engine speed stored in the RAM 353, an output signal of the accelerator opening sensor 36 (accelerator opening), an output signal value of the airflow meter 11 (amount of intake air), an amount of fuel injection, and the like. Using the engine speed, the accelerator opening, the amount of intake air, and the amount of fuel injection as parameters, the CPU 351 accesses a flow rate adjusting valve control map stored in the ROM 352 so as to calculate a timing for opening the flow rate adjusting valve 30. The CPU 351 opens the flow rate adjusting valve 30 at the timing thus calculated.

In this case, high-pressure fuel discharged from the fuel pump 6 is supplied to the reducing agent injection valve 28 via the reducing agent supplying passage 29. If the pressure of fuel supplied to the reducing agent injection valve 28 becomes equal to or higher than an opening pressure, the reducing agent injection valve 28 opens so that fuel as a reducing agent is injected into the exhaust manifold 18.

The reducing agent that has been injected into the exhaust manifold 18 from the reducing agent injection valve 28 mixes with exhaust gas that has flown from a region upstream of the exhaust manifold 18, thus forming exhaust gas having a stoichiometric or rich air-fuel ratio . Such stoichiometric or rich exhaust gas flows into the occlusion-reduction type NOx catalyst 20.

If exhaust gas having a stoichiometric or rich air-fuel ratio thus flows into the occlusion-reduction type NOx catalyst 20, nitrogen oxides (NOx) occluded by the occlusion-reduction type NOx catalyst 20 are reduced to nitrogen (N₂) and the like while being discharged.

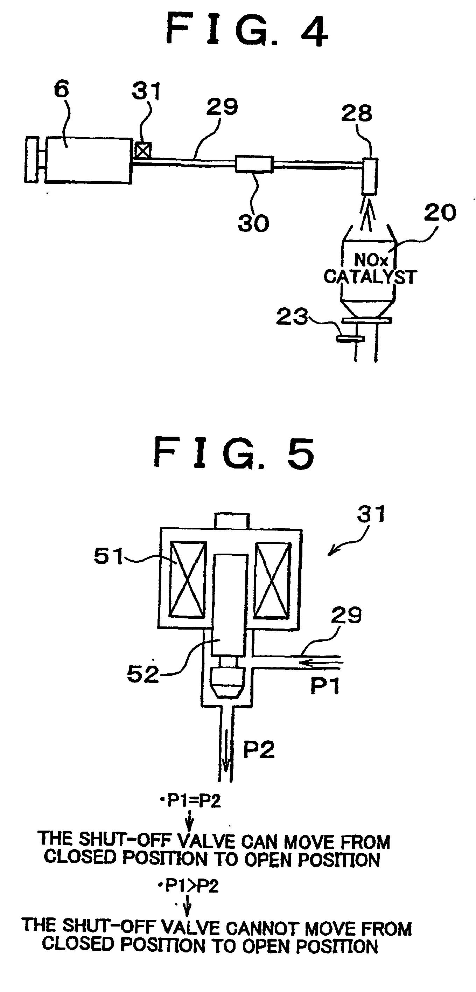

The following description will be made referring to Fig. 4, which shows an essential part of the device according to the first embodiment of the invention. The reducing agent supplying passage 29 is provided as a fuel supplying passage through which fuel as a reducing agent is supplied to the reducing agent injection valve 28 from the fuel pump 6. The reducing agent supplying passage 29 is designed to supply the reducing agent injection valve 28 constituting a fuel adding device with fuel via the flow rate adjusting valve 30. The flow rate adjusting valve 30 is a valve for regulating the amount of fuel to be added. As described above, the flow rate adjusting valve 30 has a preset opening so that the amount of fuel to be supplied is held constant. It is needless to mention that the opening of the flow rate adjusting valve 30 may be adjustable.

Furthermore, the emergency shut-off valve 31 is disposed upstream of the flow rate adjusting valve 30 and downstream of the fuel pump 6 in Fig. 1. As shown in Fig. 5, the emergency shut-off valve 31 is an electromagnetic valve having a movable core 52 equipped with a front end portion to which the reducing agent supplying passage 29 leads. An electromagnetic force generated by a solenoid coil 51 drives the movable core 52. The front end portion of the movable core 52 has a shut-off surface at a front end thereof, and a pressure-receiving surface on the side opposite to the shut-off surface. The shut-off surface comes into abutment on an outlet leading to the downstream side and thus stops fuel from flowing through the reducing agent supplying passage 29. The pressure-receiving surface receives a pressure of fuel flowing from a region upstream of the reducing agent supplying passage 29.

The electromagnetic force of the solenoid coil 51 is set as follows. If there is no difference between an inlet fuel pressure P1 and an outlet fuel pressure P2 in the emergency shut-off valve 31, the movable core 52 can be driven and thus the emergency shut-off valve 31 can be opened and closed. If the inlet fuel pressure P1 is higher than the outlet fuel pressure P2, the emergency shut-off valve 31 cannot be driven from a closed position to an open position due to a differential pressure P1-P2.

The air-fuel ratio sensor 23 is connected to the input port of the ECU 35. A fuel leakage determining means for making a determination on fuel leakage in accordance with data outputted from the air-fuel ratio sensor 23 is stored in the ROM 352. A warning lamp, which is lit up to advise the driver of a state of malfunction if the fuel leakage determining means determines that fuel leakage has occurred, is disposed on an instrumental panel in front of a driver seat.

The ECU 35 as a driving control means also performs driving control of the emergency shut-off valve 31.

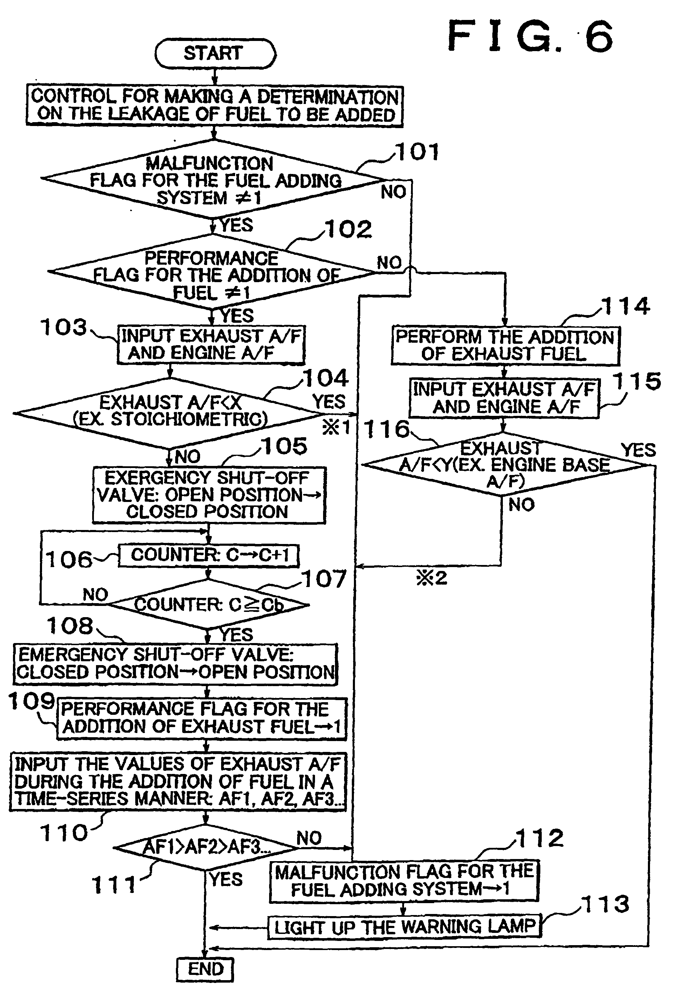

An example of driving control will be described with reference to a flowchart shown in Fig. 6.

First of all, it is determined in step 101 whether or not a fuel adding system suffers a malfunction. That is, it is determined whether or not a malfunction flag for the fuel adding system has been set as 1 since last execution of the present routine. If the malfunction flag has been set as 1, it is determined that the fuel adding system suffers a malfunction. If the malfunction flag has not been set as 1, the fuel adding system does not suffer a malfunction. Thus, the process proceeds to step 102 where it is determined whether or not a performance flag for the addition of fuel has been set as 1.

On the other hand, if the malfunction flag for the fuel adding system has been set as 1, the process proceeds to step 112 where the malfunction flag for the fuel adding system, which was set as 1 during last execution of the present routine, is maintained as it is. Then, the warning lamp is lit up in step 113.

If the performance flag for the addition of fuel has not been set as 1 in step 102, that is, if no instruction to perform the addition of fuel has been issued, the process proceeds to step 103 where the engine air-fuel ratio (intake air-fuel ratio) and the air-fuel ratio of exhaust gas detected by the air-fuel ratio sensor 23 are inputted. If the performance flag for the addition of fuel has been set as 1 in step 102, the process proceeds to step 114 where the addition of exhaust fuel is performed.

Next, the air-fuel ratio of exhaust gas and the air-fuel ratio of intake air are inputted in step 115. The process then proceeds to step 116 where it is determined whether or not the air-fuel ratio of exhaust gas is smaller than a predetermined value Y such as an engine base air-fuel ratio. If the air-fuel ratio of exhaust gas is smaller than the predetermined value, the present routine is terminated immediately. If the result in step 116 is negative, it is determined that a reducing agent is being supplied inappropriately. The process then proceeds to step 112. The inappropriate supply of the reducing agent during the addition of fuel is regarded as ascribable to the clogging of a nozzle for adding fuel, an insufficient feed pressure of fuel based on leakage of fuel to the outside from a line for adding fuel, the inability to open the emergency shut-off valve 31, a malfunction in opening the valve for regulating the amount of fuel to be added, or the like.

Then, in step 103, the air-fuel ratio of exhaust gas and the engine air-fuel ratio are inputted. Then, the process proceeds to step 104 where it is determined whether or not the exhaust air-fuel ratio is smaller than a predetermined value X such as a stoichiometric air-fuel ratio. If the exhaust air-fuel ratio is smaller than the predetermined value X, the process proceeds to step 112 where the malfunction flag for the fuel adding system is set as 1. The exhaust air-fuel ratio is smaller than the stoichiometric air-fuel ratio, for example, if fuel is injected into the exhaust pipe without interruption. Such continuous injection of fuel is considered to result, for example, from a malfunction of the flow rate adjusting valve 30. If the exhaust air-fuel ratio is greater than the predetermined value in step 104, the emergency shut-off valve 31 is closed (step 105).

Herein, in step 106, the value of a counter C is incremented by 1. This incremental operation in step 106 is repeated until the counter C reaches a value equal to or greater than a predetermined value Cb in step 107. If the counter C reaches a value equal to or greater than Cb, the process proceeds to step 108 where the emergency shut-off valve 31 is opened. That is, the aforementioned steps 105 to 108 are designed such that the emergency shut-off valve 31 remains closed for a predetermined period and then is opened. In this case, a first electromagnetic valve (the solenoid coil 51) of the emergency shut-off valve 31 is used. Should fuel leakage occur in the fuel adding system, the outlet fuel pressure P2 becomes lower than the inlet fuel pressure P1 in the emergency shut-off valve 31. The movable core 52 is unable to move due to the differential pressure P1-P2, so that the emergency shut-off valve 31 remains closed and cannot be opened.

If the performance flag for the addition of exhaust fuel is set as 1 in step 109 on the condition that the emergency shut-off valve 31 be open in step 108, the addition of fuel is performed. Then, exhaust air-fuel ratios during the addition of fuel are inputted in a time-series manner in step 110.

Then, the fuel leakage determining means determines in step 111 whether or not the exhaust air-fuel ratios thus inputted are arranged in such an order as to decrease gradually with the lapse of time. If these exhaust air-fuel ratios are not arranged in such an order as to decrease gradually with the lapse of time, it is apparent that the exhaust air-fuel ratio has not shifted to the rich side. This means that the outlet fuel pressure P2 becomes lower than the inlet fuel pressure P1 in the emergency shut-off valve 31 due to fuel leakage, that the movable core 52 is unable to move due to the differential pressure P1-P2, that the emergency shut-off valve 31 remains closed, and that the operation of supplying fuel to be added has been stopped.

In such a case, the process proceeds to step 112 where the malfunction flag for the fuel adding system is set as 1.

On the other hand, if the exhaust air-fuel ratios are arranged in such an order as to decrease gradually with the lapse of time in step 111, the present routine is terminated assuming that there is no malfunction.

As described above, this embodiment is designed such that the outlet fuel pressure P2 becomes lower than the inlet fuel pressure P1 in the emergency shut-off valve 31 upon the occurrence of fuel leakage, that the movable core 52 is unable to move due to the differential pressure P1-P2, and that the emergency shut-off valve 31 remains closed, thus making it possible to prevent further escalation of the inconvenience of fuel leakage.

Further, it is possible to detect from a detection value of the air-fuel ratio sensor 23 downstream of the catalyst 20 whether or not fuel leakage has occurred.

Such a method makes it possible to detect fuel leakage more easily and less expensively as compared with the case where the fuel adding system is further provided with a pressure sensor.

Next, the second embodiment of the invention will be described.

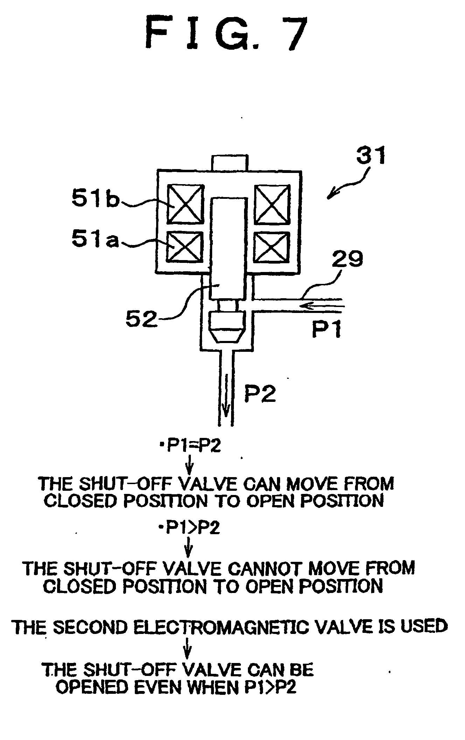

This embodiment is different from the first embodiment in that the emergency shut-off valve 31 has a two-stage structure composed of a first electromagnetic valve and a second electromagnetic valve (a first solenoid coil 51a and a second solenoid coil 51b) as shown in Fig. 7. The emergency shut-off valve 31 of this embodiment is an electromagnetic valve having a movable core 52 equipped with a front end portion to which the reducing agent supplying passage 29 leads. During normal operation, the movable core 52 is driven by an electromagnetic force generated by the first solenoid coil 51a. As in the case of the first embodiment, the front end portion of the movable core 52 has a shut-off surface at a front end thereof, and a pressure-receiving surface on the side opposite to the shut-off surface. The shut-off surface comes into abutment on the outlet leading to the downstream side and thus stops fuel from flowing through the reducing agent supplying passage 29. The pressure-receiving surface receives a pressure of fuel flowing from the region upstream of the reducing agent supplying passage 29.

The electromagnetic force of the first solenoid coil 51a is set as follows. If there is no difference between the inlet fuel pressure P1 and the outlet fuel pressure P2 in the emergency shut-off valve 31, the movable core 52 can be driven and thus the emergency shut-off valve 31 can be opened and closed. If the inlet fuel pressure P1 is higher than the outlet fuel pressure P2, the emergency shut-off valve 31 cannot be driven from a closed position to an open position due to the differential pressure P1-P2.

In the case where it becomes necessary to forcefully open the emergency shut-off valve 31 while this state is maintained, if an electric current is applied to the second solenoid coil 51b, the electromagnetic force of the second solenoid coil 51b drives the movable core 52 from a closed position to an open position against the differential pressure P1-P2.

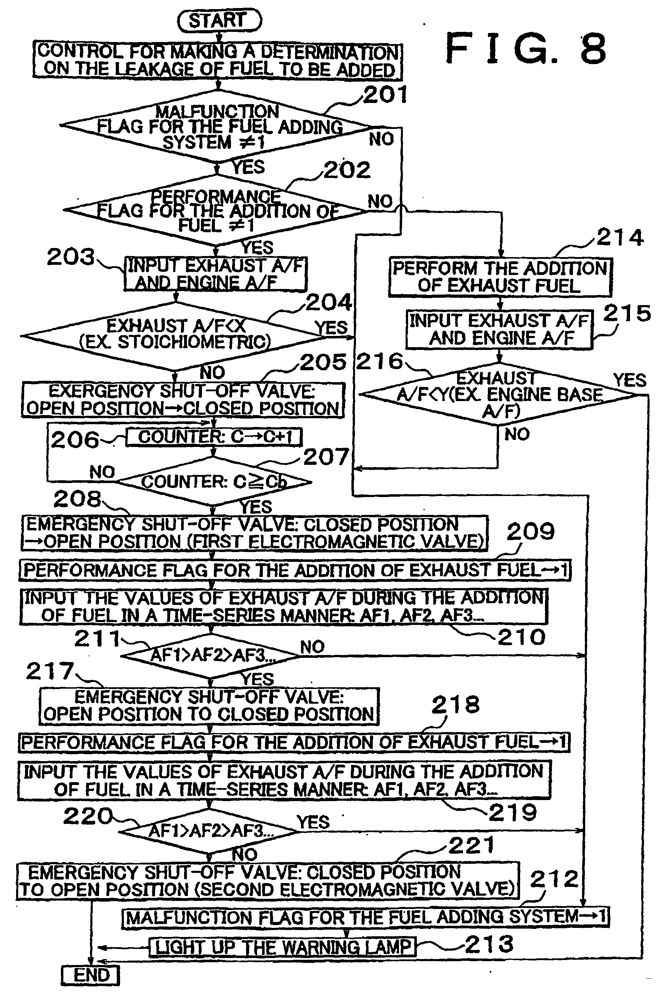

Fig. 8 is a flowchart showing an example of control that is performed in this second embodiment to make a determination on the leakage of fuel to be added.

First of all, it is determined in step 201 whether or not the malfunction flag for the fuel adding system has been set as 1. If the malfunction flag for the fuel adding system has been set as 1, the process proceeds to step 212 where the malfunction flag is held at 1. Then, the warning lamp is lit up (step 213), and the present routine is terminated temporarily.

On the other hand, if the malfunction flag has not been set as 1 in step 201, that is, if there is no malfunction, it is determined whether or not the performance flag for the addition of fuel has been set as 1. If the performance flag has been set as 1, it is assumed that an instruction to perform the addition of fuel has been issued. Thus, the process proceeds to step 214 where the addition of exhaust fuel is performed. Then, the air-fuel ratio of exhaust gas and the engine air-fuel ratio are inputted in step 215. It is determined herein whether or not the exhaust air-fuel ratio is smaller than a predetermined value Y such as an engine base air-fuel ratio (step 216). If the exhaust air-fuel ratio is smaller than the engine base air-fuel ratio, the present routine is terminated immediately. On the contrary, if the exhaust air-fuel ratio is not smaller than the engine base air-fuel ratio, it is determined that a reducing agent is being supplied inappropriately during the addition of fuel. Then, the process proceeds to step 212.

On the other hand, if the performance flag for the addition of fuel has not been set as 1 in step 202, that is, if the addition of fuel has not been performed yet or no instruction to perform the addition of fuel has been issued, the process proceeds to step 203 where the exhaust air-fuel ratio and the engine air-fuel ratio are inputted. It is determined herein whether or not the exhaust air-fuel ratio is smaller than a predetermined value X such as a stoichiometric air-fuel ratio (step 204). If the exhaust air-fuel ratio is smaller than the stoichiometric air-fuel ratio in step 204, the process proceeds to step 212 on the assumption that there is a malfunction. This results from the same cause as in the case of the aforementioned control example.

If the exhaust air-fuel ratio is equal to or greater than the stoichiometric air-fuel ratio, the process proceeds to step 205 where the emergency shut-off valve 31 is closed. Then, the value of the counter C is incremented in step 206 and step 207 as in the case of the aforementioned control example. If it is determined that the counter C has reached a value equal to or greater than the predetermined value Cb, the emergency shut-off valve 31 is opened in step 208. That is, the emergency shut-off valve 31 remains closed for a predetermined period and then is opened. In this case, the first electromagnetic valve (the first solenoid coil 51a) of the emergency shut-off valve 31 is used. Should fuel leakage occur in the fuel adding system, the outlet fuel pressure P2 becomes lower than the inlet fuel pressure P1 in the emergency shut-off valve 31. The movable core 52 is unable to move due to the differential pressure P1-P2, so that the emergency shut-off valve 31 remains closed and cannot be opened.

The performance flag for the addition of exhaust fuel is set as 1 in step 209 after the emergency shut-off valve 31 has been opened in step 208. Then, exhaust air-fuel ratios during the addition of fuel are inputted in a time-series manner in step 210. It is determined in step 211 whether or not the exhaust air-fuel ratios thus inputted are arranged in such an order as to decrease gradually. If these exhaust air-fuel ratios are not arranged in such an order as to decrease gradually, it is apparent that the air-fuel ratio has not shifted to the rich side despite the addition of fuel. Therefore, the malfunction flag is set as 1 in step 212 on the assumption that the fuel adding system suffers a malfunction.

If the exhaust air-fuel ratios are arranged in such an order as to decrease with the lapse of time, it is determined that the air-fuel ratio has shifted to the rich side and that there is no malfunction. Thus, the process proceeds to step 217 where the emergency shut-off valve 31 is closed by an electromagnetic force of the first solenoid coil 51a. Then, an instruction to add fuel is issued in step 218 while maintaining the emergency shut-off valve 31 closed. In other words, the performance flag for the addition of exhaust fuel is set as 1.

The air-fuel ratio during the addition of fuel is then monitored in step 219. If the exhaust air-fuel ratio becomes lean despite the addition of fuel, it is determined that the emergency shut-off valve 31 is closed normally. If the exhaust air-fuel ratio during the addition of fuel is rich, it is determined that the emergency shut-off valve 31 confronts a closure failure. That is, it is determined in step 220 whether or not the exhaust air-fuel ratios are arranged in such an order as to decrease gradually. If the exhaust air-fuel ratios are arranged in such an order as to decrease gradually, the malfunction flag is set as 1 in step 212. If the exhaust air-fuel ratios are not arranged in such an order as to decrease gradually, the process proceeds to step 221 where the emergency shut-off valve 31 is opened by an electromagnetic force of the second electromagnetic valve (the second solenoid coil 51b).

In this case, unlike the aforementioned case of step 111 of the first embodiment, fuel is added by opening the reducing agent injection valve 28 on the condition that the emergency shut-off valve 31 be closed in advance in step 217. Thus, if the emergency shut-off valve 31 is closed normally, the exhaust air-fuel ratios ought not to be arranged in such an order as to decrease gradually in step 220. Namely, the air-fuel ratio ought not to have shifted to the rich side in step 220.

If the exhaust air-fuel ratios are not arranged in such an order as to decrease gradually in step 220, normal operation of the emergency shut-off valve 31 is confirmed. In this case, since the reducing agent injection valve 28 is opened on the condition that the emergency shut-off valve 31 be closed in step 217, the outlet fuel pressure P2 becomes lower than the inlet fuel pressure P1 in the emergency shut-off valve 31. Thus, the movable core 52 is unable to move due to the differential pressure P1-P2, and the emergency shut-off valve 31 remains closed and cannot be opened. To overcome such a situation, the movable core 52 is driven due to application of an electromagnetic force from the second solenoid coil 51b in step 221.

That is, in the case where the addition of fuel is performed while the emergency shut-off valve 31 is closed, if fuel in the fuel line is added, the operation of supplying fuel is stopped and the exhaust air-fuel ratio does not shift despite the issuance of an instruction to add more fuel. However, should the output of the exhaust air-fuel ratio sensor 23 demonstrate a change, it can be determined that the emergency shut-off valve 31 is in a state of leakage (closure failure). In the case where the emergency shut-off valve 31 is in normal operation, if the addition of fuel is started when the emergency shut-off valve 31 is closed, it becomes impossible to open the emergency shut-off valve 31 afterwards. However, the emergency shut-off valve 31 can be opened and closed irrespective of the differential pressure between the inlet fuel pressure P1 and the outlet fuel pressure P2 in the emergency shut-off valve 31 if the two-stage structure composed of the two electromagnetic valves as in the case of this embodiment is adopted.

As is apparent from the foregoing description, although malfunctions (leakage, clogging, and the like) of a fuel supplying system constitute an obstacle in the art for supplying an NOx catalyst with fuel for the purpose of reducing the amount of NOx, the first and the other embodiments of the invention make it possible to detect fuel leakage and a closure failure of the emergency shut-off valve respectively.

The embodiments of the invention are designed such that the emergency shut-off valve for shutting off the fuel line in the event of fuel leakage is constructed as described above, and that it is impossible to open the emergency shut-off valve despite the issuance of an opening signal once a differential pressure is generated across the valve during closure thereof, thus making it possible to forcefully hold the shut-off valve closed in the event of fuel leakage. Hence, further escalation of the inconvenience can be prevented. In addition, it becomes possible to detect fuel leakage and the clogging of the injectors (nozzles) by means of the air-fuel ratio sensor that is conventionally disposed in the exhaust system.

## Claims

1. An exhaust gas purifying device for an internal combustion engine, comprising:
an exhaust gas purifying catalyst (20) disposed in an exhaust system;
a reducing agent supplying mechanism including a fuel adding device (28) for adding fuel to the exhaust gas purifying catalyst (20) as a reducing agent, and a fuel supplying source (6) for supplying the fuel adding device (28) with fuel via a fuel supplying passage (29),
**characterized by**
an emergency shut-off valve (31) disposed in the fuel supplying passage (29) for shutting off the fuel supplying passage (29), said emergency shut-off valve (31) being driven by driving means (51; 51a) with a driving force being set such that the emergency shut-off valve (31) cannot be opened when the upstream fuel pressure (P1) applied to the emergency shut-off valve (31) is higher than the downstream fuel pressure (P2) applied to the emergency shut-off valve (31)
shut-off valve position detecting means (35) for detecting that the emergency shut-off valve (31) is closed; and
fuel leakage determining means (35) for making a determination that fuel leakage has occurred in the reducing agent supplying mechanism by performing the following steps:
issuing an instruction to said driving means (51; 51a) to close the emergency shut-off valve (31),
issuing an instruction to said driving means (51; 51a) to open the emergency shut-off valve (31), and
determining that fuel leakage has occurred in the reducing agent supplying mechanism downstream of the emergency shut-off valve (31), if the shut-off valve position detecting means (35) determines that the emergency shut-off valve (31) is not opened by said driving means (51; 51a) despite of the issuance of said instruction to open the emergency shut-off valve (31).

2. The exhaust gas purifying device according to claim 1, further comprising exhaust air-fuel ratio detecting means (23) for detecting an exhaust air-fuel ratio (A/F), wherein the shut-off valve position detecting means (35) determines that the emergency shut-off valve (31) is not opened by said driving means (51; 51a) by performing the following steps:
detecting a sequence of exhaust air-fuel ratios (AF1, AF2, AF3) after the issuance of said instruction to open the emergency shut-off valve (31) and after the issuance of an instruction to the reducing agent supplying mechanism to add fuel, and
determining that the emergency shut-off valve (31) is not opened by said driving means (51; 51a) despite of the issuance of said instruction to open the emergency shut-off valve (31), if the exhaust air-fuel ratios thus detected are not arranged in such an order as to shift to the rich side with lapse of time.

3. The exhaust gas purifying device according to claim 2, wherein the instruction to add fuel is issued after the emergency shut-off valve (31) remains closed for a predetermined period.

4. The exhaust gas purifying device according to any of claims 1-3, wherein the driving means is a solenoid coil (51; 51a).

5. The exhaust gas purifying device according to any of claims 1-4, wherein the emergency shut-off valve (31) has a two-stage structure composed of first and second driving means (51a, 51b), the driving force of the first driving means (51a) being set such that the emergency shut-off valve (31) does not open when the upstream fuel pressure (P1) applied to the emergency shut-off valve (31) is higher than the downstream fuel pressure (P2) applied to the emergency shut-off valve (31), and the driving force of the second driving means (51b) being set such that the emergency shut-off valve (31) can be forcefully opened even when the upstream fuel pressure (P1) applied to the emergency shut-off valve (31) is higher than the downstream fuel pressure (P2) applied to the emergency shut-off valve (31).

6. The exhaust gas purifying device according to claim 5, with claim 5 being dependent from any of claims 2-4, wherein, if the exhaust air-fuel ratios detected by the shut-off valve position detecting means (35) are arranged in such an order as to shift to the rich side with the lapse of time, the following steps are performed:
the fuel leakage determining means (35) issues an instruction to the first driving means (51a) to close the emergency shut-off valve (31),
the shut-off valve position detecting means (35) then detects a sequence of exhaust air-fuel ratios (AF1, AF2, AF3) after the issuance of an instruction to the reducing agent supplying mechanism to add fuel and regards the emergency shut-off valve (35) as having been closed normally and issues an instruction to the second driving means (51b) to forcefully open the emergency shut-off valve (31), if the exhaust air-fuel ratios thus detected are not arranged in such an order as to shift to the rich side with the lapse of time.

7. The exhaust gas purifying device according to any of claims 2-6, further comprising control means (35) for making a determination that a malfunction has occurred in the reducing agent supplying mechanism by performing the following steps:
determining before the issuance of the instruction to add fuel as the reducing agent whether or not the exhaust air-fuel ratio (A/F) is smaller than a first predetermined value (X), and
determining a malfunction of fuel adding, if the exhaust air-fuel ratio (A/F) is smaller than the first predetermined value (X) .

8. The exhaust gas purifying device according to any of claims 2-7, further comprising control means (35) for making a determination that a malfunction has occurred in the reducing agent supplying mechanism by performing the following steps:
determining after the issuance of the instruction to add fuel whether or not the exhaust air-fuel ratio (A/F) is smaller than a second predetermined value (Y), and
determining that the reducing agent is being supplied inappropriately, if the exhaust air-fuel ratio (A/F) is equal to or greater than the second predetermined value (Y).

## Patentansprüche

1. Abgasreinigungsvorrichtung für einen Verbrennungsmotor, mit:
einem in einem Abgassystem befindlichen Abgasreinigungskatalysator (20);
einem Reduktionsmittelzuführmechanismus, der eine Kraftstoffzugabevorrichtung (28) zum Zugeben von Kraftstoff als Reduktionsmittel zum Abgasreinigungskatalysator (20) und eine Kraftstoffversorgungsquelle (6) zum Versorgen der Kraftstoffzugabevorrichtung (28) über eine Kraftstoffversorgungsleitung (29) mit Kraftstoff enthält,
**gekennzeichnet durch**
ein in der Kraftstoffversorgungsleitung (29) befindliches Notabsperrventil (31) zum Absperren der Kraftstoffversorgungsleitung (29), das von einer Antriebseinrichtung (51; 51a) mit einer Antriebskraft angetrieben wird, die so eingestellt ist, dass das Notabsperrventil (31) nicht geöffnet werden kann, wenn der auf das Notabsperrventil (31) aufgebrachte stromaufwärtige Kraftstoffdruck (P1) höher als der auf das Notabsperrventil (31) aufgebrachte stromabwärtige Kraftstoffdruck (P2) ist;
eine Absperrventilstellungs-Erfassungseinrichtung (35) zum Erfassen, dass das Notabsperrventil (31) geschlossen ist; und
eine Kraftstoffleckage-Feststellungseinrichtung (35) zum Feststellen, dass es in dem Reduktionsmittelzuführmechanismus zu einer Kraftstoffleckage gekommen ist, unter Durchführung der folgenden Schritte:
Abgeben einer Anweisung an die Antriebseinrichtung (51; 51a), das Notabsperrventil (31) zu schließen,
Abgeben einer Anweisung an die Antriebseinrichtung (51; 51a), das Notabsperrventil (31) zu öffnen, und
Feststellen, dass es in dem Reduktionsmittelzuführmechanismus stromabwärts von dem Notabsperrventil (31) zu einer Kraftstoffleckage gekommen ist, falls die Absperrventilstellungs-Erfassungseinrichtung (35) trotz Abgabe der Anweisung, das Notabsperrventil (31) zu öffnen, feststellt, dass das Notabsperrventil (31) nicht von der Antriebseinrichtung (51; 51a) geöffnet wird.

2. Abgasreinigungsvorrichtung nach Anspruch 1, mit einer Abgas/Kraftstoff-Verhältnis-Erfassungseinrichtung (23) zum Erfassen eines Abgas/Kraftstoff-Verhältnisses (A/F), wobei die Absperrventilstellungs-Erfassungseinrichtung (35) unter Durchführung der folgenden Schritte feststellt, dass das Notabsperrventil (31) nicht durch die Antriebseinrichtung (51; 51a) geöffnet wird:
Erfassen einer Abfolge von Abgas/Kraftstoff-Verhältnissen (AF1, AF2, AF3) nach der Abgabe der Anweisung, das Notabsperrventil (31) zu öffnen, und nach der Abgabe einer Anweisung an den Reduktionsmittelzuführmechanismus Kraftstoff zuzugeben, und
Feststellen, dass das Notabsperrventil (31) trotz der Abgabe der Anweisung, das Notabsperrventil (31) zu öffnen, nicht durch die Antriebseinrichtung (51; 51a) geöffnet wird, falls die so erfassten Abgas/Kraftstoff-Verhältnisse nicht in einer solchen Reihenfolge angeordnet sind, dass sie sich mit Ablauf der Zeit zur fetten Seite verlagern.

3. Abgasreinigungsvorrichtung nach Anspruch 2, bei der die Anweisung Kraftstoff zuzugeben abgegeben wird, nachdem das Notabsperrventil (31) für eine vorbestimmte Dauer geschlossen geblieben ist.

4. Abgasreinigungsvorrichtung nach einem der Ansprüche 1-3, bei der die Antriebseinrichtung eine Solenoidspule (51; 51a) ist.

5. Abgasreinigungsvorrichtung nach einem der Ansprüche 1-4, bei der das Notabsperrventil (31) einen zweistufigen Aufbau aus einer ersten und zweiten Antriebseinrichtung (51a, 51b) hat, wobei die Antriebskraft der ersten Antriebseinrichtung (51a) so eingestellt ist, dass sich das Notabsperrventil (31) nicht öffnet, wenn der auf das Notabsperrventil (31) aufgebrachte stromaufwärtige Kraftstoffdruck (P1) höher als der auf das Notabsperrventil (31) aufgebrachte stromabwärtige Kraftstoffdruck (P2) ist, und die Antriebskraft der zweiten Antriebseinrichtung (51b) so eingestellt ist, dass das Notabsperrventil (31) energisch geöffnet werden kann, selbst wenn der auf das Notabsperrventil (31) aufgebrachte stromaufwärtige Kraftstoffdruck (P1) höher als der auf das Notabsperrventil (31) aufgebrachte stromabwärtige Kraftstoffdruck (P2).

6. Abgasreinigungsvorrichtung nach Anspruch 5, wobei Anspruch 5 von einem der Ansprüche 2-4 abhängt, bei der die folgenden Schritte durchgeführt werden, falls die von der Absperrventilstellungs-Erfassungseinrichtung (35) erfassten Abgas/Kraftstoff-Verhältnisse in einer solchen Reihenfolge angeordnet sind, dass sie sich mit Ablauf der Zeit zur fetten Seite verlagern:
die Kraftstoffleckage-Feststellungseinrichtung (35) gibt an die erste Antriebseinrichtung (51a) eine Anweisung ab, das Notabsperrventil (31) zu schließen,
die Absperrventilstellungs-Erfassungseinrichtung (35) erfasst dann nach der Abgabe einer Anweisung an den Reduktionsmittelzuführmechanismus Kraftstoff zuzugeben eine Abfolge von Abgas/Kraftstoff-Verhältnissen (AF1, AF2, AF3) und betrachtet das Notabsperrventil (35) als normal geschlossen und gibt eine Anweisung an die zweite Antriebseinrichtung (51b) ab, das Notabsperrventil (31) energisch zu öffnen, falls die so erfassten Abgas/Kraftstoff-Verhältnisse nicht in einer solchen Reihenfolge angeordnet sind, dass sie sich mit Ablauf der Zeit zur fetten Seite verlagern.

7. Abgasreinigungsvorrichtung nach einem der Ansprüche 2-6, mit einer Steuerungseinrichtung (35) zum Feststellen, dass es in dem Reduktionsmittelzuführmechanismus zu einer Störung gekommen ist, unter Durchführung der folgenden Schritte:
vor der Abgabe der Anweisung, als Reduktionsmittel Kraftstoff zuzugeben, Feststellen, ob das Abgas/Kraftstoff-Verhältnis (A/F) kleiner als ein erster vorbestimmter Wert (X) ist oder nicht, und
Feststellen einer Störung der Kraftstoffzugabe, falls das Abgas/Kraftstoff-Verhältnis (A/F) kleiner als der erste vorbestimmte Wert (X) ist.

8. Abgasreinigungsvorrichtung nach einem der Ansprüche 2-7, mit einer Steuerungseinrichtung (35) zum Feststellen, dass es in dem Reduktionsmittelzuführmechanismus zu einer Störung gekommen ist, unter Durchführung der folgenden Schritte:
nach der Abgabe der Anweisung Kraftstoff zuzugeben Feststellen, ob das Abgas/Kraftstoff-Verhältnis (A/F) kleiner als ein zweiter vorbestimmter Wert (Y) ist oder nicht, und
Feststellen, dass das Reduktionsmittel unsachgemäß zugeführt wird, falls das Abgas/Kraftstoff-Verhältnis (A/F) größer oder gleich dem zweiten vorbestimmten Wert (Y) ist.

## Revendications

1. Dispositif de purification des gaz d'échappement pour un moteur à combustion interne, comprenant :
un catalyseur de purification des gaz d'échappement (20) disposé dans un système d'échappement ;
un mécanisme d'alimentation en agent de réduction comprenant un dispositif d'ajout de carburant (28) destiné à ajouter du carburant vers le catalyseur de purification des gaz d'échappement (20) en tant qu'agent de réduction, et une source d'alimentation en carburant (6) destinée à délivrer le carburant vers le dispositif d'ajout de carburant (28) via un passage d'alimentation en carburant (29),
**caractérisé par**
un robinet de sectionnement d'urgence (31) disposé dans le passage d'alimentation en carburant (29) pour fermer le passage d'alimentation en carburant (29), ledit robinet de sectionnement d'urgence (31) étant entraîné par un moyen d'entraînement (51 ; 51a) avec une force d'entraînement étant établie d'une manière telle que le robinet de sectionnement d'urgence (31) ne peut pas être ouvert lorsque la pression du carburant en amont (P1) appliquée au robinet de sectionnement d'urgence (31) est supérieure à la pression du carburant en aval (P2) appliquée au robinet de sectionnement d'urgence (31) ;
un moyen de détection de position de robinet de sectionnement (35) destiné à détecter que le robinet de sectionnement d'urgence (31) est fermé ; et
un moyen de détermination de fuite de carburant (35) destiné à rendre une détermination stipulant qu'une fuite de carburant s'est produite dans le mécanisme d'alimentation en agent de réduction en réalisant les étapes suivantes :
délivrer une instruction vers ledit moyen d'entraînement (51 ; 51a) pour fermer le robinet de sectionnement d'urgence (31),
délivrer une instruction vers ledit moyen d'entraînement (51 ; 51a) pour ouvrir le robinet de sectionnement d'urgence (31), et
déterminer qu'une fuite de carburant s'est produite dans le mécanisme d'alimentation en agent de réduction en aval du robinet de sectionnement d'urgence (31) si le moyen de détection de position de robinet de sectionnement (35) détermine que le robinet de sectionnement d'urgence (31) n'est pas ouvert par le moyen d'entraînement (51 ; 51a) malgré la délivrance de ladite instruction pour ouvrir le robinet de sectionnement d'urgence (31).

2. Dispositif de purification des gaz d'échappement selon la revendication 1, comprenant de plus un moyen de détection de rapport air-carburant d'échappement (23) destiné à détecter un rapport air-carburant d'échappement (A/F), dans lequel le moyen de détection de position de robinet de sectionnement (35) détermine que le robinet de sectionnement d'urgence (31) n'est pas ouvert par ledit moyen d'entraînement (51 ; 51a) en réalisant les étapes suivantes :
détecter une séquence de rapports air-carburant d'échappement (AF1, AF2, AF3) après la délivrance de ladite instruction pour ouvrir le robinet de sectionnement d'urgence (31) et après la délivrance d'une instruction vers le mécanisme d'alimentation en agent de réduction pour ajouter le carburant, et
déterminer que le robinet de sectionnement d'urgence (31) n'est pas ouvert par ledit moyen d'entraînement (51 ; 51a) malgré la délivrance de ladite instruction pour ouvrir le robinet de sectionnement d'urgence (31), si les rapports air-carburant d'échappement ainsi détectés ne sont pas disposés dans un ordre tel de façon à se décaler vers le côté riche avec l'écoulement du temps.

3. Dispositif de purification des gaz d'échappement selon la revendication 2, dans lequel l'instruction d'ajout de carburant est délivrée après que le robinet de sectionnement d'urgence (31) soit resté fermé pendant une période prédéterminée.

4. Dispositif de purification des gaz d'échappement selon l'une quelconque des revendications 1 à 3, dans lequel le moyen d'entraînement est une bobine à solénoide (51 ; 51a).

5. Dispositif de purification des gaz d'échappement selon l'une quelconque des revendications 1 à 4, dans lequel le robinet de sectionnement d'urgence (31) présente une structure à deux étages composée d'un premier et d'un deuxième moyens d'entraînement (51a, 51b), la force d'entraînement du premier moyen d'entraînement (51a) étant établie d'une manière telle que le robinet de sectionnement d'urgence (31) ne s'ouvre pas lorsque la pression du carburant en amont (P1) appliquée au robinet de sectionnement d'urgence (31) est supérieure à la pression du carburant en aval (P2) appliquée au robinet de sectionnement d'urgence (31), et la force d'entraînement du deuxième moyen d'entraînement (51b) étant établie d'une manière telle que le robinet de sectionnement d'urgence (31) peut être ouvert de force même lorsque la pression du carburant en amont (P1) appliquée au robinet de sectionnement d'urgence (31) est supérieure à la pression du carburant en aval (P2) appliquée au robinet de sectionnement d'urgence (31).

6. Dispositif de purification des gaz d'échappement selon la revendication 5, la revendication 5 étant dépendante de l'une quelconque des revendications 2 à 4, dans lequel, si les rapports air-carburant détectés par le moyen de détection de position de robinet de sectionnement (35) sont disposés dans un ordre tel de façon à se décaler vers le côté riche avec l'écoulement du temps, les étapes suivantes sont réalisées :
le moyen de détermination de fuite de carburant (35) délivre une instruction au premier moyen d'entraînement (51a) pour fermer le robinet de sectionnement d'urgence (31),
le moyen de détection de position de robinet de sectionnement (35) détecte ensuite une séquence des rapports air-carburant d'échappement (AF1, AF2, AF3) après la délivrance d'une instruction vers le mécanisme d'alimentation en agent de réduction pour ajouter le carburant et considère le robinet de sectionnement d'urgence (35) comme ayant été fermé normalement et délivre une instruction vers le deuxième moyen d'entraînement (51b) pour ouvrir de force le robinet de sectionnement d'urgence (31) si les rapports air-carburant d'échappement ainsi détectés ne sont pas disposés dans un ordre tel de façon à se décaler vers le côté riche avec l'écoulement du temps.

7. Dispositif de purification des gaz d'échappement selon l'une quelconque des revendications 2 à 6, comprenant de plus un moyen de commande (35) destiné à effectuer une détermination stipulant qu'un dysfonctionnement s'est produit dans le mécanisme d'alimentation en agent de réduction en réalisant les étapes suivantes :
déterminer avant la délivrance de l'instruction d'ajout de carburant en tant qu'agent de réduction si oui ou non le rapport air-carburant d'échappement (A/F) est inférieur à une première valeur prédéterminée (X), et
déterminer un dysfonctionnement de l'ajout du carburant, si le rapport air-carburant d'échappement (A/F) est inférieur à la première valeur prédéterminée (X).

8. Dispositif de purification des gaz d'échappement selon l'une quelconque des revendications 2 à 7, comprenant de plus un moyen de commande (35) destiné à effectuer une détermination stipulant qu'un dysfonctionnement s'est produit dans le mécanisme d'alimentation en agent de réduction en réalisant les étapes suivantes :
déterminer après la délivrance de l'instruction d'ajout de carburant si oui ou non le rapport air-carburant d'échappement (A/F) est inférieur à une deuxième valeur prédéterminée (Y), et
déterminer que l'agent de réduction est délivré de manière inappropriée, si le rapport air-carburant d'échappement (A/F) est égal ou supérieur à la deuxième valeur prédéterminée (Y).
